# EUROPÄISCHE PATENTSCHRIFT

(11) **EP 2 880 850 B1**
(45) Veröffentlichungstag und Bekanntmachung des Hinweises auf die Patenterteilung: **05.09.2018**
(21) Anmeldenummer: 13750276.1
(22) Anmeldetag: 31.07.2013
(51) Int. Cl.: H04N 1/00, H04N 1/40

(54) **VERFAHREN ZUM EINGRAVIEREN VON BILDERN MITTELS STRAHLUNG IN EINE STRAHLUNGSEMPFINDLICHE SCHICHT, INSBESONDERE ZUM LASERGRAVIEREN**
METHOD FOR ENGRAVING IMAGES WITH RADIATION ON A RADIATION SENSITIVE LAYER, ESPECIALLY FOR LASER ENGRAVING
PROCÉDÉ DE GRAVURE D'IMAGES AVEC RADIATION DANS UNE COUCHE SENSIBLE AUX RAYONS, SPÉCIALEMENT POUR LA GRAVURE AU LASER

(30) Priorität: 02.08.2012 DE 102012015382
(43) Veröffentlichungstag der Anmeldung: 10.06.2015
(73) Patentinhaber: Bundesdruckerei GmbH, 10969 Berlin (DE)
(72) Erfinder: KRAMER, Thomas, 80805 München (DE)
(74) Vertreter: Ter Meer Steinmeister & Partner
(86) Internationale Anmeldenummer: PCT/EP2013/066116
(87) Internationale Veröffentlichungsnummer: WO 2014/020078

(56) Entgegenhaltungen:
- EP-A1- 0 975 148
- EP-A2- 0 680 198

## Beschreibung

Die Erfindung betrifft ein Verfahren zum Lasergravieren von Bildern mittels Strahlung in eine strahlungsempfindliche Schicht,

Das Eingravieren von Bildern, beispielsweise von Passbildern, Unterschriften, die Fälschungssicherheit erhöhenden grafischen Mustern und dergleichen, mittels Strahlung, insbesondere mittels Laserstrahlung in eine strahlungsempfindliche Schicht, wird bei der Herstellung von Ausweiskarten und -papieren wie beispielsweise Kreditkarten, Bankkarten, Barzahlungskarten, Personalausweisen, Führerscheinen und Pässen weitgehend eingesetzt. Für die Lasergravur oder Laserbeschriftung sind die Ausweiskarten oder die zu beschriftenden Blätter von Pässen und dergleichen mit einer für die Lasergravur geeigneten Schicht, beispielsweise einer durch spezielle Zusatzstoffe sensibilisierten Folie oder einer für die verwendete Strahlung empfindlichen Lackschicht versehen, sodass durch Bestrahlung der strahlungsempfindlichen Schicht eine im Folgenden als Schwärzung bezeichnete optische und/oder haptische Veränderung der Schicht erzeugt werden kann.

Um ein Bild, beispielsweise ein Porträtfoto, einen wie auch immer gearteten Schriftzug oder auch ein Relief in die Schicht einzugravieren, wird die Schicht mit einem Laserstrahl punktweise abgetastet, wobei die auf jeden Bildpunkt auftreffende Strahlungsenergie oder Strahlungsmenge so eingestellt wird, dass eine der gewünschten Graustufe des Bildpunktes entsprechende Schwärzung erzielt wird. Um insbesondere Porträtfotos mit hoher Qualität in eine strahldungempfindliche Schicht einzugravieren, ist es erforderlich, dass die Strahlungsenergie für jeden Bildpunkt so genau eingestellt werden kann, dass 64, 128, 256 oder mehr Graustufen erzielt werden können.

Bei einem aus der EP 0 975 148 B1 bekannten Lasergravurverfahren können qualitativ hochwertige Bilder dadurch graviert werden, dass ein Bild zu Beispiel zunächst nur mit 90% des Soll-Schwärzungsgrades graviert wird. Der dabei tatsächlich erzeugte Schwärzungsgrad (also die entsprechende Graustufe) jedes einzelnen Bildpunktes wird von einer Messeinrichtung aufgenommen. Mit einem zweiten, additiv wirkenden Gravurdurchgang wird die Differenz des gemessenen Schwärzungsgrades zum 100% Soll-Schwärzungsgrad graviert, sodass der Ziel-Schwärzungsgrad, also die für jeden Punkt erforderliche Graustufe mit guter Genauigkeit erreicht wird. Eine gute Reproduzierbarkeit der Graustufen, also der Schwärzungsgrade wird also dadurch erzielt, dass die beim ersten Gravurschritt auftretenden Abweichungen gemessen und durch den zweiten Gravurschritt ausgeglichen werden.

Obwohl mit dem bekannten Verfahren Bilder in sehr hoher Qualität graviert werden können, wird es als nachteilig angesehen, dass das bekannte Verfahren mehrere, mindestens zwei komplette Gravurdurchgänge pro Bild braucht. Daher ist pro Bild mindestens doppelt so viel Zeit erforderlich als für ein Bild, das in einem einzigen Durchgang graviert werden kann. Demzufolge wird der Durchsatz der Lasergravurmaschine, also die Anzahl der gravierten Dokumente pro Stunde beim Einsatz des bekannten Verfahrens gesenkt. Für eine Produktion mit vorgegebenem Solldurchsatz werden demzufolge mehr Maschinen benötigt, was höhere Kosten verursacht.

Um bei der Quantisierung von Bildern den ursprünglichen Grautoneindruck nicht vollständig zu verlieren, sind bereits Algorithmen bekannt, die beispielsweise nach dem Error-Diffusions-Verfahren arbeiten. Ein Beispiel dafür ist der Floyd-Steinberg-Algorithmus, bei dem der bei der Quantisierung auftretende Fehler (die Differenz zwischen Ausgangswert und quantisiertem Wert) eines jeden Pixels nach einem festen Schema auf die umliegenden Pixel verteilt wird. Der Fehler eines jeden Pixels oder Bildpunktes wird dabei anteilig auf den nächsten zu quantisierenden Bildpunkt der gleichen Zeile sowie auf die drei unmittelbar benachbarten Pixel der nächsten Zeile verteilt. Die übrigen benachbarten Pixel, also die Pixel der vorhergehenden Zeile und das unmittelbar vorher quantisierte Pixel bleiben dabei unberücksichtigt. Bereits quantisierte Pixel werden also nicht geändert, während noch abzuarbeitende Pixel oder Bildpunkte entsprechend den jeweils auftretenden Quantisierungsfehlern beeinflusst werden.

Die EP 0 680 198 A2 beschreibt einen Tintenstrahldrucker mit optischer Rückmeldung, bei dem das Bild in mehreren Durchgängen gedruckt wird. Hier wird nach einem ersten Druckdurchgang, bei dem weniger Tinte aufgetragen wird, als für die endgültig gewünschte Schwärzung erforderlich ist, die erzielte Schwärzung in den einzelnen Bildpunkten erfasst, um ausgehend davon die Schwärzung für im nächsten Druckdurchgang über das Bild zu druckende Korrekturbildpunkte zu berechnen. Das Bild kann dabei in zwei, drei oder mehr Durchgängen gedruckt werden. Ferner wird der theoretische Vorschlag gemacht, den optischen Sensor zur Erfassung des Schwärzungsgrades direkt unter dem Druckkopf anzuordnen, um ein augenblickliches Erfassen der erzielten Schwärzung zu ermöglichen und die erfasste Schwärzung in Fehlerdiffusionsalgorithmen zu nutzen, so dass bei jedem Druckdurchgang die dabei auftretenden Fehler bis zu einem gewissen Maß bereits korrigiert werden können. Dies ermöglicht theoretisch weniger Druckdurchgänge bei gleicher Qualität.

Die Aufgabe der vorliegenden Erfindung besteht somit darin, ein Verfahren bereitzustellen, mit dem in einem einzigen Gravurdurchgang qualitativ hochwertige Bilder graviert werden können.

Diese Aufgabe wird durch das Verfahren nach Anspruch 1 gelöst. Vorteilhafte Ausgestaltungen und Weiterbildungen der Erfindung sind in den Unteransprüchen beschrieben.

Erfindungsgemäß ist also vorgesehen, dass während oder unmittelbar nach dem Gravieren eines Bildpunktes, vorzugsweise noch bevor der nächste Bildpunkt im Raster graviert wird, mit einer Messeinrichtung der erreichte Schwärzungsgrad des eben gravierten Bildpunktes gemessen und die Differenz zu seinem Soll-Schwärzungsgrad berechnet wird. Die gemessene Differenz wird dann in den Zielschwärzungsgrad benachbarter Bildpunkte im Raster, die noch nicht graviert sind, eingerechnet und diese veränderten Zielschwärzungsgrade werden dann während der laufenden Lasergravur des Bildes verwendet.

Tritt eine Abweichung der Ist-Graustufe (Ist-Schwärzung) von der Soll-Graustufe (Soll-Schwärzung) auf, so wird diese dadurch kompensiert, dass benachbarte noch nicht gravierte Bildpunkte in ihren Graustufen entsprechend der Differenz angehoben oder abgesenkt werden, um so den Helligkeitseindruck in der Umgebung des aktuell gravierten Bildpunktes im Vergleich zum Gesamtbild aufrechtzuerhalten.

Eine eventuelle Abweichung der Graustufe (Schwärzung) des aktuell gravierten Bildpunktes wird also durch eine Korrektur in der unmittelbaren Umgebung ausgeglichen, also durch die Veränderung der benachbarten noch nicht gravierten Bildpunkte.

Bei einer zweckmäßigen Ausgestaltung der Erfindung ist vorgesehen, dass die Differenz ΔS_{i,k} zwischen ermittelter und vorbestimmter Schwärzung auf drei benachbarte Bildpunkte P_{i+1,k-1}; P_{i+1,k}; P_{i+1,k+1} der nächsten zu gravierenden Zeile oder Spalte verteilt wird. Hierdurch wird erreicht, dass der beim Gravieren aufgetretene Fehler für benachbarte Bildpunkte oder Pixel auch dann berücksichtigt werden kann, wenn nur eine relativ geringe Rechnerleistung zur Verfügung steht.

Bevorzugter Weise wird jedoch auch ein Anteil der Differenz zwischen erzielter und vorbestimmter Schwärzung beim nächsten in Abtastrichtung zu gravierenden Bildpunkt berücksichtig, wenn eine entsprechend hohe Rechnerleistung zur Verfügung steht, sodass das Gravieren von Bildern nicht verzögert wird.

Bei einer anderen technischen Ausgestaltung der Erfindung ist vorgesehen, dass die Differenz ΔS_{i,k} zwischen ermittelter und vorbestimmter Schwärzung für jeden Bildpunkt P_{i,k} ermittelt wird, die Differenz ΔS_{i,k} zwischen ermittelter und vorbestimmter Schwärzung mit einem vorgegebenen relativen oder absoluten Schwellenwert verglichen wird, und die Differenz nur dann auf zumindest zwei noch zu bestrahlende benachbarte Bildpunkte verteilt wird, wenn die Differenz zwischen ermittelter und vorbestimmter Schwärzung größer als der Schwellenwert ist.

Hierdurch lässt sich bei geeigneter Wahl eines Schwellenwertes für den zulässigen Fehler, als absoluter Fehler (in Graustufen angegeben) oder als relativer Fehler (in Prozent angegeben) erreichen, dass ein scharfes Bild mit der gewünschten Grauwertverteilung bei reduziertem Rechenaufwand erhalten wird.

Die Erfindung wird im Folgenden Beispielsweise anhand der Zeichnung näher erläutert. Es zeigen
Figur 1 ein schematisches Blockdiagramm einer Lasergravuranlage zur Durchführung des erfindungsgemäßen Verfahrens, und
Figur 2 einen Ausschnitt aus einem Pixel- oder Bildpunktarray zur Erläuterung des erfindungsgemäßen Verfahrens.

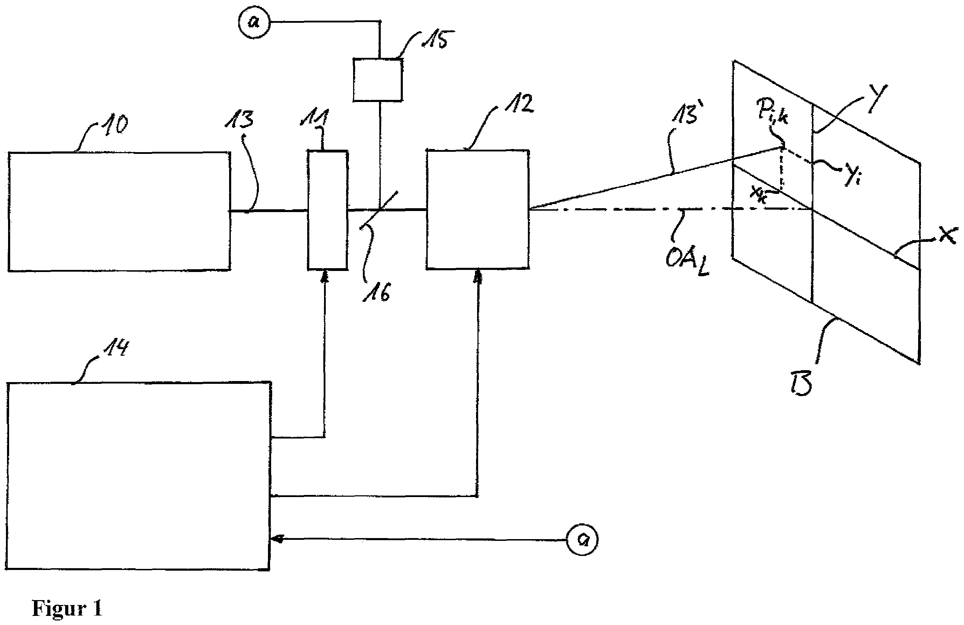

Wie in Figur 1 dargestellt, weist eine Lasergravur- oder -beschriftungsanlage ein Lasersystem 10, eine Verschlusseinrichtung 11 und eine Stahlablenkeinrichtung 12 auf. Ein von dem Lasersystem 10 erzeugter Laserstahl 13 gelangt durch die Verschlusseinrichtung 11, die beispielsweise eine akusto-optische Schaltblende sein kann, zur Strahlablenkeinrichtung 12 die den Laserstahl 13 in X- und Y-Richtung so ablenkt, dass ein Schreibstrahl 13' eine Bildebene B punktweise abtastet.

Eine Steuervorrichtung 14 steuert die Verschlusseinrichtung 11 und die Strahlablenkeinrichtung 12 in der Weise, dass die auf jeden Bildpunkt P_{i,k} einer strahlungsempfindlichen Schicht auftreffende Strahlungsenergie so groß ist, dass in dem Bildpunkt eine Schwärzung erreicht wird, die der dem Bildpunkt zugeordneten Graustufe entspricht.

An Stelle einer vom Lasersystem 10 getrennten Verschlusseinrichtung 11, die die Laserleistung auf der bestrahlten Fläche steuert, kann auch das Laserstahl-Austrittsfenster des Lasersystems 10 zur Einstellung der Stahlleistung verwendet werden. Wird beispielsweise ein kontinuierlich gepumpter Laser insbesondere ein Neodym-YAG-Laser verwendet, um die Bestrahlung der strahlungsempfindlichen Schicht entsprechende Laserimpulse zu erzeugen, so lässt sich der Durchlassgrad des Austrittsfensters für jeden einzelnen Bestrahlungsvorgang individuell variieren, um die Impulshöhe jedes Laserimpulses einzustellen. Der Durchlassgrad des Austrittsfensters lässt sich dabei für jeden Impuls so genau einstellen, dass bis zu 256 Graustufen oder mehr erzeugt werden können. An Stelle der beschriebenen Vorrichtungen zur Einstellung der Laserleistung kann auch jede andere Einstellvorrichtung verwendet werden, die geeignet ist, die Stahlleistung des Schreibstrahls 13' entsprechend den von der Steuervorrichtung 14 vorgegebenen Graustufen- oder Schwärzungswerten zu variieren.

Um die mit einem jeweiligen Bestrahlungsvorgang erzielte Schwärzung zu ermitteln, ist ein Impulshöhenfühler 15 vorgesehen, der über einen schwachen Teilerspiegel 16 oder dergleichen einen kleinen Teil der Impulsenergie empfängt und der für jeden Laserimpuls ein entsprechendes Ausgangssignal an die Steuervorrichtung 14 liefert. Die erfasste Impulshöhe steht, je nach dem verwendeten fotoempfindlichen Material und dem benutzen Lasersystem, in einem festen Zusammenhang mit der damit erreichten Schwärzung. Dieser Zusammenhang lässt sich durch einen geeigneten Kalibrierungslauf ermitteln und wird für die Steuerung der einzelnen Bestrahlungsvorgänge benötigt.

Um ein Bild, also beispielsweise ein Porträtfoto eines Ausweisinhabers, eine Unterschrift, weitere Schriftzüge, grafische Muster oder dergleichen in die zum Lasergravieren geeignete strahlungsempfindliche Schicht einzugravieren, wird die Verschlusseinrichtung 11 so gesteuert, dass die für jeden Bildpunkt durchgelassene Strahlungsenergie in dem Bildpunkt eine bestimmte Schwärzung bewirkt, die die für den jeweiligen Bildpunkt vorbestimmte Graustufe ergibt. Durch zeilenweises oder spaltenweises Abtasten der gesamten Bildfläche wird das gewünschte Bild Punkt für Punkt in die entsprechende Schicht graviert, sodass ein Grautonbild erhalten wird.

Treten nun Schwankungen in der Strahlungsleistung oder Strahlungsstärke auf, so wird in einem Bildpunkt nicht die vorbestimmte Schwärzung erzielt, sondern eine größere oder kleinere Schwärzung, je nachdem ob die Strahlungsstärke höher oder kleiner ist als gewünscht.

Um derartige Gravurfehler nicht nur zu erkennen, sondern auch auszugleichen, wird für jeden Bildpunkt P_{i,k} die erzielte Schwärzung ermittelt und mit der vorbestimmten Schwärzung verglichen. Zweckmäßigerweise wird die Schwärzung aus der Strahlstärke oder Impulshöhe bestimmt, die mit dem Impulshöhenfühler 15 erfasst wird.

Aus der Abweichung der von dem Impulshöhenfühler gemessenen Strahlstärke von der Sollstahlstärke kann ein Regelsignal abgeleitet werden, dass dazu dient, Systemschwankungen in üblicher Weise auszuregeln.

Um die Bildqualität insgesamt zu verbessern, wird an Stelle der Regelung oder vorzugsweise zusätzlich zur Regelung aus der erfassten Strahlstärke die entsprechende erzielte Schwärzung Sᵢₛₜ(P_{i,k}) des entsprechenden Bildpunktes P_{i,k} ermittelt. Um den Graustufenfehler zu erhalten, wird der Wert der erzielten Schwärzung vom Wert der vorbestimmten Schwärzung abgezogen. Dieser Fehlerwert könnte nun einfach dem oder den nächsten zu gravierenden Bildpunkt(en) P_{i,k+1} zugeschlagen werden. Wird der Fehlerwert mehreren folgenden Bildpunkten derselben Zeile zugeschlagen, kann dies mit abnehmender Gewichtung erfolgen. Dies wurde bereits von der Anmelderin versucht. Dabei hat sich aber gezeigt, dass es dann zu einem Rauschen im Bild kommt, wodurch sich der Gesamteindruck des Bildes verschlechtert. Ferner haben derartige Verfahren unterschiedliche Auswirkungen auf horizontale, also in Zeilenrichtung gelegene, und vertikale, also in Spaltenrichtung gelegene Kantenkontraste. Während der Kontrast einer horizontalen Kante erhalten bleibt, wird der einer vertikalen Kante verschmiert.

Erfindungsgemäß ist daher vorgesehen, dass der Fehler nicht nur auf den oder die folgenden zu gravierenden Bildpunkt(e) derselben Zeile (oder Spalte), sondern auch auf zwei oder mehr noch nicht gravierte Bildpunkte benachbarter Zeilen (oder Spalten) in der Umgebung des aktuell gravierten Bildpunktes P_{i,k} verteilt wird. Somit werden die Kanten aller Orientierungen gleich behandelt, und Details werden besser abgebildet.

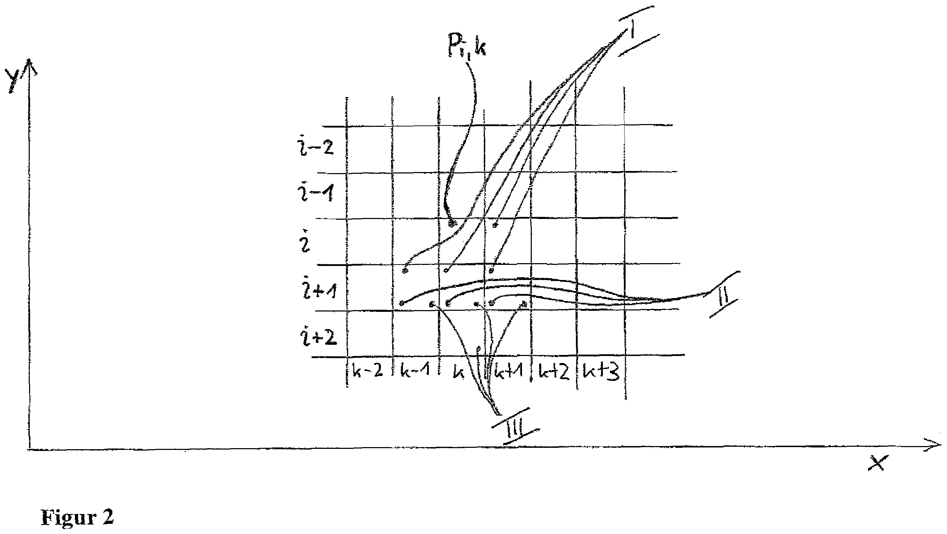

Tritt beim Gravieren des Bildpunktes P_{i,k} der in Figur 2 schematisch angedeuteten Bildpunktmatrix eines zu gravierenden Bildes eine Differenz ΔS_{i,k} = Sₛₒₗₗ(P_{i,k}) - Sᵢₛₜ(P_{i,k}) auf, so kann diese Differenz oder dieser Fehler auf die benachbarten noch nicht gravierten Bildpunkte verteilt werden. Wird angenommen, dass das Bild zeilenweise graviert wird, so sind bereits die Zeilen i-2 und i-1 vollständig graviert, während in der Zeile i alle Pixel bis einschließlich P_{i,k-1} vor der Gravur des Bildpunktes P_{i,k} erstellt wurden. Der Fehler kann dann auf die noch zu gravierenden Bildpunkte, zum Beispiel auf die Bildpunkte P_{i,k+1}, P_{i+1,k-1}, P_{i+1,k}, P_{i+1,k+1} (Bildpunktgruppe I), verteilt werden. Im einfachsten Fall wird der Fehler dazu durch die Anzahl der Pixel geteilt, auf die er erteilt werden soll. Somit ergibt sich für die Graustufe oder Schwärzung der benachbarten Bildpunkte der Wert S = ¼ ΔS_{i,k}+ Sₛₒₗₗ(P_{i,k+1}). Dieser Wert wird dann beim Gravieren des nächsten Pixels als Sollwert angesehen um gegebenenfalls wiederum eine entsprechende Fehlerdifferenz zu erfassen.

Im Hinblick auf die hohen Graviergeschwindigkeiten die erreicht werden sollen, kann auch in Betracht gezogen werden, den ermittelten Fehler nur auf die drei oben genannten Pixel der folgenden Zeile, also der Zeile i+1 (Bildpunktgruppe II) zu verteilen.

Soll der Fehler nur auf Bildpunkte folgender Zeilen verteilt werden so ist es auch möglich, die Fehler auf die drei unmittelbar benachbarten Bildpunkte der Zeile i+1 sowie auf den Bildpunkt der Zeile i+2 P_{i+2,k} (Bildpunktgruppe III) zu verteilen.

Zweckmäßigerweise werden die zu verteilenden Fehler nicht nur einfach durch die Anzahl der Bildpunkte geteilt, sondern so gewichtet, dass die in Zeilenrichtung und Spaltenrichtung unmittelbar benachbarten Pixel, also die Bildpunkte P_{i,k+1} und P_{i+1,k} einen größeren Anteil am Fehler erhalten, als die diagonal benachbarten Pixel P_{i+1,k-1} und P_{i+1,k+1}. Erfindungsgemäß wird also der beim Gravieren von Bildpunkten auftretende Fehler erfasst und nicht nur zum Regeln der Strahlungsleistung bzw. -stärke eingesetzt, sondern auch auf zumindest zwei benachbarte Bildpunkte verteilt. Die Verteilung des Fehlers kann dabei gleichmäßig sein oder einem vorgegebenen Schema folgen. Das Schema kann dabei für alle Bildpunkte gleich sein. Es ist aber auch denkbar, dass in Abhängigkeit von der zu erzielenden Graustufe verschiedene Schemata verwendet werden. Beispielsweise ist es denkbar, in dunklen Bildbereichen den Fehler einfach gleichmäßig auf die entsprechenden benachbarten Bildpunkte aufzuteilen, während in hellen Bildbereichen Schemata verwendet werden, die nicht nur den Helligkeitseindruck möglichst genau wiedergeben, sondern auch den Kontrast des Bildes erhalten.

Da beim Gravieren von Bildern mittel Laserstrahlung nicht notwendigerweise ein Fehler auftritt, der eine wahrnehmbare Abweichung des erzielten Grauwertes vom gewünschten Grauwert auftritt, ist es zweckmäßig, eine Verteilung des Fehlers nur dann vorzusehen, wenn dieser einen bestimmten absoluten oder relativen Wert übersteigt. Hierzu wird die Differenz ΔS_{i,k} zwischen ermittelter und vorbestimmter Schwärzung mit einem absoluten oder relativen Schwellenwert verglichen, der der zulässigen Abweichung der Schwärzung vom Sollwert entspricht, um im Folgenden nur dann die ermittelte Differenz auf die benachbarten Bildpunkte zu verteilen, wenn die Differenz größer als der Schwellenwert ist, ansonsten wird der nächste und auch die benachbarten Bildpunkte entsprechend ihrem ursprünglichen Graustufenwert graviert.

Erfindungsgemäß wird also ein Verfahren zum Eingravieren von Bildern bereitgestellt, das es ermöglicht, qualitativ hochwertige Bilder in einem einzelnen Graviervorgang herzustellen, bei dem jeder Bildpunkt nur einmal graviert wird.

## Patentansprüche

1. Verfahren zum Eingravieren von Bildern mittels Laserstrahlung in eine strahlungsempfindliche Schicht, bei dem die Schicht punktweise so bestrahlt wird, dass für einen Bildpunkt (P_{i,k}) eine Schwärzung (Sᵢₛₜ(P_{i,k})) erzielt wird, die einer für diesen Bildpunkt (P_{i,k}) vorbestimmten Graustufe entspricht, wobei für den Bildpunkt (P_{i,k})
- die erzielte Schwärzung (Sᵢₛₜ(P_{i,k})) ermittelt wird,
- die Differenz (ΔS_{i,k}) zwischen ermittelter Schwärzung (Sᵢₛₜ(P_{i,k})) und vorbestimmter Schwärzung (Sₛₒₗₗ(P_{i,k})) berechnet wird, und
- die Differenz (ΔS_{i,k}) auf mehrere noch zu bestrahlende, benachbarte Bildpunkte (P_{i,k+n}; P_{i+n,k+m}) benachbarter Zeilen oder Spalten verteilt wird.

2. Verfahren nach Anspruch 1, **dadurch gekennzeichnet, dass** die Differenz (ΔS_{i,k}) zwischen ermittelter und vorbestimmter Schwärzung auf drei benachbarte Bildpunkte (P_{i+1,k-1}; P_{i+1,k}; P_{i+1,k+1}) der nächsten zu gravierenden Zeile oder Spalte verteilt wird.

3. Verfahren nach Anspruch 2, **dadurch gekennzeichnet, dass** ein Teil der Differenz (ΔS_{i,k}) dem nächsten Bildpunk (P_{i,k+1}) in Abtastrichtung zugeschlagen wird.

4. Verfahren nach einem der Ansprüche 1, 2 oder 3, **dadurch gekennzeichnet, dass**
- die Differenz (ΔS_{i,k}) zwischen ermittelter und vorbestimmter Schwärzung für jeden Bildpunkt (P_{i,k}) ermittelt wird,
- die Differenz (ΔS_{i,k}) zwischen ermittelter und vorbestimmter Schwärzung mit einem vorgegebenen relativen oder absoluten Schwellenwert verglichen wird, und
- die Differenz nur dann auf zumindest zwei noch zu bestrahlende benachbarte Bildpunkte verteilt wird, wenn die Differenz zwischen ermittelter und vorbestimmter Schwärzung größer als der Schwellenwert ist.

## Claims

1. A method for engraving images into a radiation-sensitive layer by means of laser radiation, wherein the layer is irradiated point by point such that a blackening (Sᵢₛₜ (P_{i, k})) is achieved for an image point (P_{i, k}), said blackening corresponding to a grayscale level specified for said image point (P_{i, k}), wherein, for the image point (P_{i, k}),
- the achieved blackening (Sᵢₛₜ (P_{i, k})) is determined,
- the difference (ΔS_{I, k}) between determined blackening (Sᵢₛₜ (P_{i,k})) and specified blackening (Sₛₒₗₗ (P_{i,k})) is calculated, and
- said difference (ΔS_{i,k}) is distributed to a plurality of adjacent pixels (P_{i,k+n}; P_{i+n,k+m}) of adjacent rows or columns, which are yet to be irradiated.

2. The method according to claim 1, **characterized in that** said difference (ΔS_{i,k}) between determined and specified blackening is distributed to three adjacent pixels (P_{i+1, k-1}; P_{i+1,k}; P_{i+1,k+1}) of the next row or column to be engraved.

3. The method according to claim 2, **characterized in that** part of said difference (ΔS_{i,k}) is added to the next image point (P_{i,k+1}) in the scanning direction.

4. The method according to any one of claims 1, 2, or 3, **characterized in that**
- said difference (ΔS_{i,k}) between determined and specified blackening is determined for each image point (P_{i,k}),
- said difference (ΔS_{i,k}) between determined and specified blackening is compared with a predetermined relative or absolute threshold value, and
- said difference is only distributed to at least two adjacent image points which are yet to be irradiated, if the difference between determined and specified blackening is greater than the threshold value.

## Revendications

1. Procédé de gravage d'images au moyen d'un rayonnement laser dans une couche sensible aux rayonnements, dans lequel la couche est irradiée ponctuellement de telle sorte que pour un point d'image (P_{i,k}) un noircissement (Sᵢₛₜ(P_{i,k})) soit produit, qui correspond à un niveau de gris prédéterminé pour ce point d'image (P_{i,k}), dans lequel pour le point d'image (P_{i,k})
- le noircissement produit (Sᵢₛₜ(P_{i,k})) est déterminé,
- la différence (ΔS_{i,k}) entre le noircissement déterminé (Sᵢₛₜ(P_{i,k})) et le noircissement prédéterminé (Sᵢₛₜ(P_{i,k})) est calculé, et
- la différence (Δ(S_{i,k})) est répartie sur plusieurs points d'image (P_{i,k+n} ; P_{i+n,k+m}) voisins, restant encore à irradier de lignes ou colonnes voisines.

2. Procédé selon la revendication 1, **caractérisé en ce que** la différence (ΔS_{i,k}) entre un noircissement déterminé et prédéterminé est répartie sur trois points d'image voisins (P_{i+1,k-1} ; P_{i+i,k} ; P_{i+1,k+1}) des lignes ou colonnes à graver voisines.

3. Procédé selon la revendication 2, **caractérisé en ce que** une partie de la différence (ΔS_{i,k}) est additionnée au point d'image suivant (P_{i,k+1}) dans la direction de balayage.

4. Procédé selon une des revendications 1, 2 ou 3, **caractérisé en ce que**
- la différence (ΔS_{i,k}) entre le noircissement déterminé et prédéterminé est déterminée pour chaque point d'image (P_{i,k}),
- la différence (ΔS_{i,k}) entre le noircissement déterminé et prédéterminé est comparée avec une valeur seuil relative ou absolue prescrite, et
- la différence est alors répartie sur au moins deux points d'image voisins restant à irradier, lorsqu'une différence entre le noircissement déterminé et prédéterminé est plus grande que la valeur seuil.
